# EUROPEAN PATENT APPLICATION

(11) **EP 1 953 674 A1**
(43) Date of publication of application: **06.08.2008**
(21) Application number: 07101362.7
(22) Date of filing: 29.01.2007
(51) Int. Cl.: G06K 7/10, G06K 7/12, G07F 7/06

(54) **Identifying apparatus**

(71) Applicant: DATALOGIC S.P.A., 40012 Lippo di Calderara di Reno (Bologna) (IT)
(72) Inventor: Mallegni, Marco, Galliera (BO) 40015 (IT); Pellegrino, Luigi, Nardò (LE) 73048 (IT)
(74) Representative: Crugnola, Pietro

(57) **Abstract**

An apparatus for identifying used material comprises a containing element (8) inside which there is housed an illuminating device (6) which illuminates an optical code (2) and a security logo (3) associated with said used material, said optical code (2) bearing coded information relating to said used material or to a product associated therewith, and a detecting device (7) which detects said optical code (2) and said security logo (3).

## Description

The invention relates to an apparatus for identifying used material, in particular used packaging material.

In order to incentivate recycling, or the correct elimination of used packaging material, in particular drinks containers such as, for example, bottles made of plastics or cans made of metal it is provided that at the moment of sale the purchaser pays a deposit that is returned when the purchaser returns the empty container.

It has been found that malicious people have requested the return of the deposit by delivering to a shopkeeper containers having features, or provenance, that are different from those of the containers for which the deposit was paid, for example containers coming from a different country from the one in which the return of the deposit was requested.

As a barcode is associated with the containers, said barcode bearing information concerning the containers, or the products contained therein, it has been proposed to use this barcode also for identifying the containers for the purposes of returning the deposit.

This is very unsatisfactory as the barcodes are easily forgeable. Consequently, forged barcodes can be applied to containers for which no deposit was paid initially. In this way, a deposit that was not due is returned, with significant financial loss to the entity, for example the retailer of drinks, that collects the used containers.

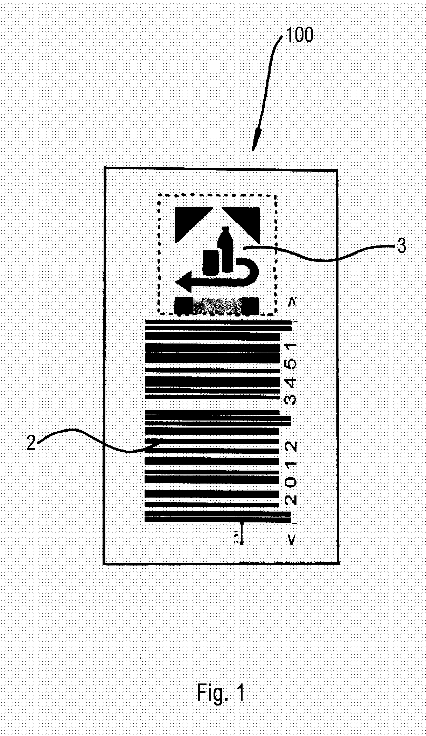

In order to overcome this drawback in addition to the aforesaid barcode also a security logo is associated with the containers, said security logo, being extremely difficult to apply or print onto the containers, ensures that the containers are provided with certain features, for example that they have a well-defined provenance, so as to substantially eliminate the risks of fraud associated to the return of deposits. In this description and in the claims that follow, the term "security logo" is intended as indicating any graphic representation to which the function is conventionally assigned of certifying a given origin or provenance. One of the aforesaid security logos, defined by the German body Deutsche Pfandsystem GmbH (DPG) and widespread in Germany, called hereinafter for the sake of brevity as the "DPG logo" or "DPG-type logo", is shown in Figure 1.

For collecting and identifying used containers, receiving machines are known that are very similar to drinks vending machines, which, however, instead of dispensing containers full of a drink, are arranged for receiving empty containers, reading the barcode, checking the authenticity of the security logo and, if the check is favourable, returning to a user the amount of the deposit paid at the moment of the purchase of the container.

Such receiving machines are known as "reverse vending machines".

Known receiving machines comprise a frame provided with a loading opening inside which a used container is inserted.

The receiving machines comprise a first illuminating device and a first detecting device, arranged inside the frame, that respectively illuminate and detect the barcode associated with the containers. The receiving machines further comprise a second illuminating device and a second detecting device, arranged inside the frame, which respectively illuminate the security logo associated with the containers and detect an image of the security logo.

The receiving machines are provided with a conveying device which receives the containers at the aforesaid loading opening, makes the containers interact with the first illuminating device, with the first detecting device, with the second illuminating device and with the second detecting device.

A drawback of known receiving vending machines is that they are very complex and costly. In addition, known receiving machines are very bulky. These machines further require periodical maintenance and cleaning due to the presence of residual liquids which have escaped from the received containers.

For the above reasons, known receiving machines are not suitable for being installed in small retail outlets, firstly since the owners of the retail outlets would be forced to make a very costly investment for the purchase or hire and maintenance of the receiving machines, secondly since the receiving machines would occupy a considerable portion of space of the retail outlets.

An object of the invention is to improve the apparatuses for identifying used material, in particular packaging material.

Another object is to obtain apparatuses for identifying used material, in particular packaging material, which are not complex and costly.

A further object is to obtain apparatuses for identifying used material, in particular packaging material, which have dimensions such as to be able to be installed even in retail outlets of limited dimensions.

In this disclosure and in the claims that follow the term "coded information" is intended to indicate the data contained in an optical code and the term "optical code" is intended to indicate any graphic representation having the function of containing coded information. Typically, the optical code associated with a product contains information relating to the product, for example the identifying data thereof such as the price, type, etc. A particular example of optical code consists of the linear or two-dimensional codes in which the information is coded through suitable combinations of elements of preset shape, for example square, rectangular or hexagonal elements with a dark colour (normally black) separated by light elements (spaces, normally white) such as the barcodes, the stacked codes and two-dimensional codes in general, colour codes, and others.

According to the invention, there is provided an apparatus for identifying used material comprising a containing element inside which there is housed an illuminating device which illuminates an optical code and a security logo associated with said used material, said optical code bearing coded information relating to said used material or to a product associated therewith, and a detecting device which detects said optical code and said security logo.

With regard to this aspect of the invention, it is possible to obtain an apparatus for identifying used material, in particular used packaging material, which has small dimensions and is structurally rather simple.

In the apparatus for identifying used material, in particular used packaging material, according to the invention a single illuminating device illuminates both the optical code and the security logo and a single detecting device detects both the optical code and the security logo.

This enables an apparatus for identifying used material, in particular used packaging material, to be obtained which is significantly simpler than known receiving machines.

The illuminating device and the detecting device are integrated inside the same containing element to make a reading unit.

This enables a reading unit to be obtained which is arranged for reading both an optical code and a security logo and which is particularly compact.

This enables the dimensions of the apparatus for identifying used material, in particular used packaging material, to be reduced further compared with known receiving machines.

Further, the containing element comprises opening means - through which the illuminating device and the detecting device interact with the optical code and the security logo - which directly face an external environment in which the apparatus is installed. In this way, an operator can manually position in front of the opening means objects bearing the optical code and the security logo in such a way that the optical code and the security logo can be illuminated and detected.

Alternatively, the containing element can be received inside a casing provided with window means.

The opening means may directly face the window means, or light deflecting means, for example a mirror, can be interposed between the opening means and the window means.

Also in this case, an operator can manually position in front of the window means objects bearing the optical code and the security logo in such a way that the optical code and the security logo can be illuminated and detected.

The apparatus according to the invention is thus much less bulky than known receiving machines since it does not require complex and bulky conveying devices which receive the aforesaid objects and make the objects interact with the illuminating device and the detecting device.

The apparatus for identifying used packaging material according to the invention is particularly suitable for being installed in points of sale.

The invention can be better understood and implemented with reference to the attached drawings, which show some embodiments thereof by way of non-limiting example, in which:
Figure 1 is a plan view of a security logo of the DPG type;
Figure 2 is a perspective view from above of an apparatus for identifying used packaging material;

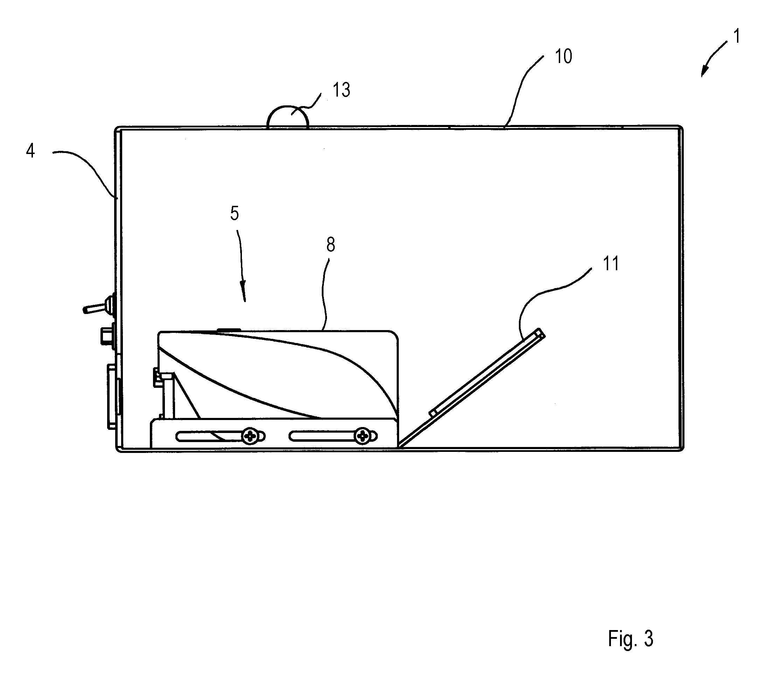

Figure 3 is a section taken along a longitudinal plane of the apparatus in Figure 1;
Figure 4 is a perspective view from above of an illuminating device and of a part of a detecting device housed in a containing element;
Figure 5 is a front view of an illuminating device and of the detecting device in Figure 4, in which a lid of the containing element has been removed;
Figure 6 is a perspective front view of an apparatus for identifying used packaging material made according to a version.

With reference to Figure 1 there is shown a label 100 applicable to a packaging material, for example a container for drinks, such as a bottle made of plastics or a can made of metal, on which there are reproduced an optical code, in the specific case a barcode 2 displaying information concerning the container and/or the contents thereof, and a security logo 3.

Alternatively, the barcode 2 and the security logo can be printed directly on the container.

The security logo 3, in the specific case of the DPG type, is a symbol that identifies and certifies the authentic provenance of the used container that has to be returned for recycling or for correct elimination. The security logo 3 certifies that a deposit was paid at the moment of purchase of the container and therefore the deposit has to be refunded to the customer who returns the used container.

The security logo of the DPG type comprises a drawing which has been printed on a support using a process that is secret. This process was devised by the Deutsche Pfandsystem GmbH body, which has standardised the security logo of the DPG type and has defined rules for printing it and recognising the authenticity thereof. The logo printing process is such that the image that is obtained by illuminating it with infrared wavelength light is different from that which is obtained by illuminating it with a mixture of red and blue light. The comparison between the images obtained, conducted by following a particular algorithm, enables the authenticity of the logo to be ascertained.

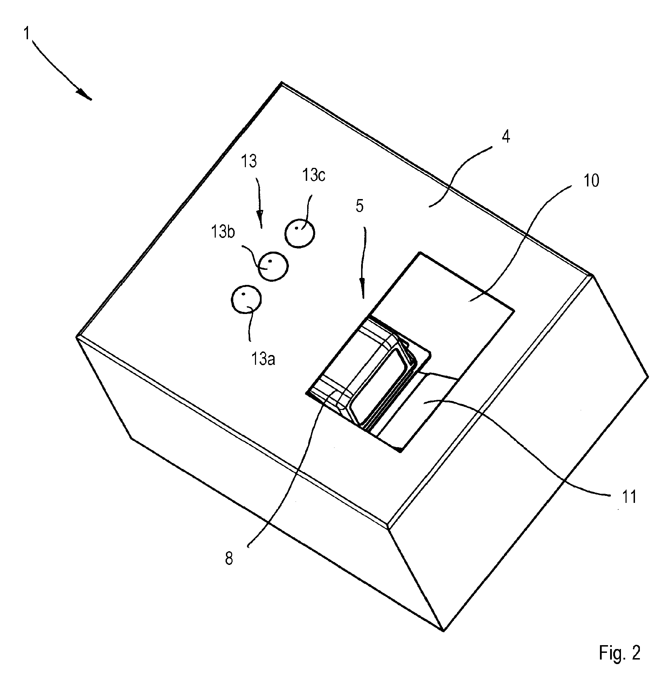

Figure 2 shows an identifying apparatus 1 for identifying used packaging material comprising a casing 4 inside which an integrated reader 5 is contained for reading an optical code and a security symbol.

Inside the casing 4 there is also provided a mirror 11. The mirror 11 reflects the light emitted by the integrated reader 5 to direct it outside the casing 4 through a window 10. The mirror 11 further reflects the light that, coming from the used packaging material - i.e. from the barcode 2 and from the security logo 3 - has passed through the window 10, to direct it to the integrated reader 5.

The dimensions of the casing 4 are preferably the same as or less than 300mm x 200mm x 250mm.

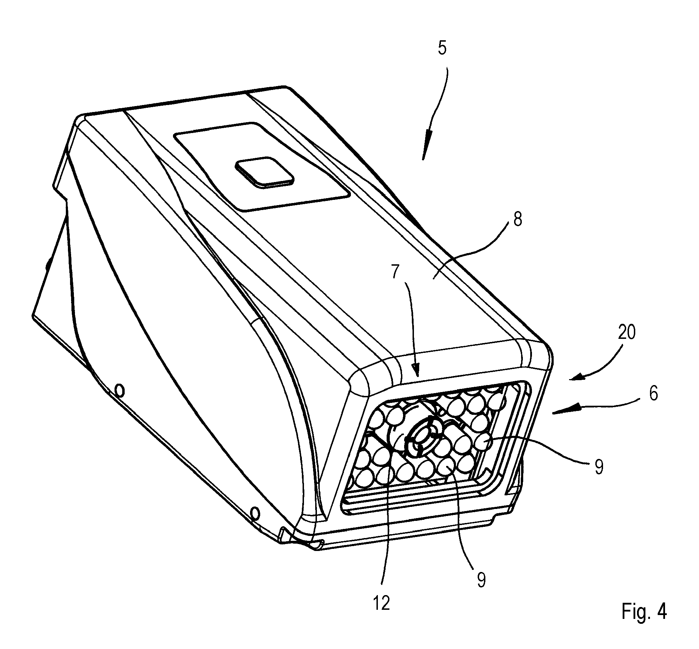

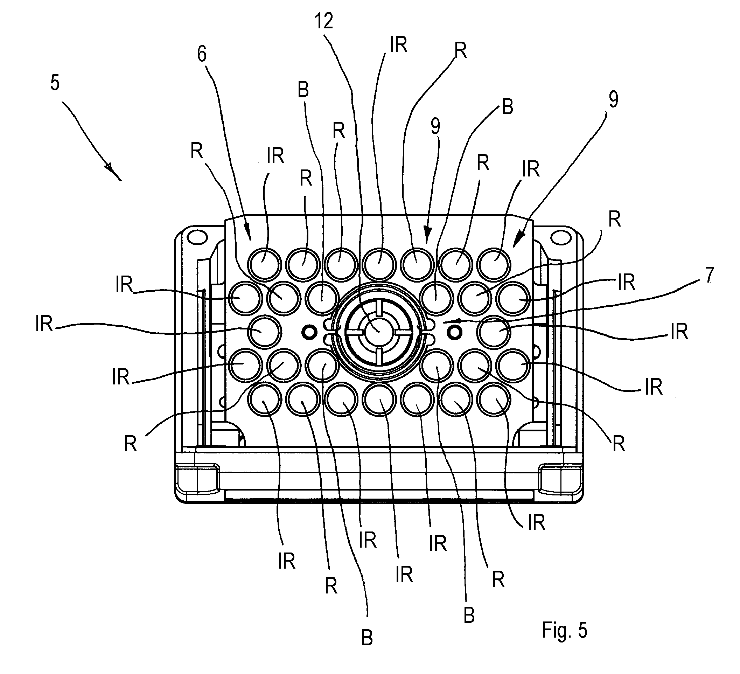

With reference to Figures 4 and 5, the integrated reader 5 comprises an illuminating device 6 and a detecting device 7 housed inside the same containing body 8 which is provided with an opening 20 through which the illuminating device and the detecting device 7 interact with the barcode 2 and with the logo 3.

The illuminating device 6 comprises a plurality of light sources 9.

The aforesaid plurality of light sources 9 comprises a first group of light sources IR (for example 14 LEDs) which emit a light having a first wavelength, for example an infrared light, a second group of light sources R (for example 10 LEDs) which emit a light having a second wavelength, for example a red light, and a third group of light sources B (for example 4 LEDs) which emit a light having a third wavelength, for example a blue light.

The detecting device 7, that detects an image of the barcode 2 and of the security logo 3, comprises an optic receiving system consisting of a lens 12 and of an optical sensor (not shown) provided with a two-dimensional matrix of photosensitive elements, for example of the CCD or CMOS type. With the optical sensor there is associated electronics dedicated to the control of the acquisition of the images and to the transfer of the images to a suitable memory. The image signal that is thus generated is processed by a processing unit (for example contained in the integrated reader 5) that is suitable both for decoding the barcode 2 and recognising the authenticity of the security logo 3 by means of suitable algorithms.

The integrated reader 5 further comprises an interface with the processing system of a cash register with which the identifying apparatus 1 can be associated.

Alternatively, the integrated reader 5 comprises an interface with the information technology network of a shop or commercial business, in which the identifying apparatus 1 is installed, for transferring the data extracted from the barcode 2 and the authentication data of the security logo 3 (the transferring being then followed by a computerised management and a transaction with the customer that is not disclosed here in detail).

In the casing 4 there is provided a coupling section of the interface with the external system.

According to a version, the integrated reader (and therefore the identifying apparatus 1) does not perform a decoding and authentication step, but the acquired images are transferred to an external processing system.

In the identifying apparatus there is also a presence sensor (not shown) for detecting the presence of an object facing the window 10.

During operation, a container is positioned manually in front of the window 10 by an operator, or, possibly, directly by the customer who returns the container and requests the refund of the deposit.

After the presence sensor has detected the container facing the window 10, the detecting device 7 and the illuminating device 6 are activated according to a preset cycle for acquiring respectively the barcode 2 and the security logo 3 that are associated - for example through application of the label 100 on which they are impressed, or through printing - with an external surface of the container.

According to a solution, the first group of light sources IR - i.e. the infrared LEDs - is activated to acquire at least an image of the container containing the security logo 3. Subsequent acquisition is achieved by activating the second group of light sources R - i.e. the red LEDs - and the third group of light sources B - i.e. the blue LEDs.

The processing unit (provided in the integrated reader 5 or outside the identifying apparatus 1) analyses in sequence the images to check compliance with the standard security logo 3 requirements.

The barcode 2 can be read indifferently on the basis of the image, or of the images, acquired with the infrared or red-blue illumination.

Alternatively to the presence sensor, it is also possible to provide another automatic system for detecting the presence of a container. For example, it is possible to provide for the optical sensor being active for intervals of time, whilst the illuminating device is switched off and as soon as the optical sensor detects a significant variation in the acquired image (indicative of the presence of an object in front of the window 10), it activates the illumination and acquisition mode proper.

From the casing 4 three signalling LEDs 13 project that indicate the operating status of the identifying apparatus 1. In particular, a green LED 13a indicates a complete reading, a yellow LED 13b a partial reading and a red LED 13c a reading failure.

Alternatively, or additionally, it is possible to provide other types of signal, such as an acoustic signal and/or the dispatch of a suitable message to the external processing system, through the interface.

The identifying apparatus 1, shown in Figures 1 and 2, can be integrated into the counter of a cash register of a supermarket or of any shop.

The operator passes the object manually over the window 10, in such a way that the barcode 2 and the security logo 3 (which, as shown in Figure 1, is located near the barcode 2) face the window 10. The identifying apparatus 1 is thus a "presentation" reading apparatus, specifically known as "flat bed" because of the horizontal arrangement. The illuminating device 7 automatically lights up in the sequence disclosed above. The operator controls the outcome of the reading by checking which one of the signal LEDs lights up.

In an embodiment, the integrated reader 5, shown in Figure 4, can be installed directly in or on the counter of a cash register of a supermarket or of any commercial business, in this case the casing 4 is not provided.

In this case, the operator passes directly in front of the opening 20 a container bearing the barcode 2 and the security logo 3.

The integrated reader 5 preferably has dimensions the same as or less than 75mm x 125mm x 60mm.

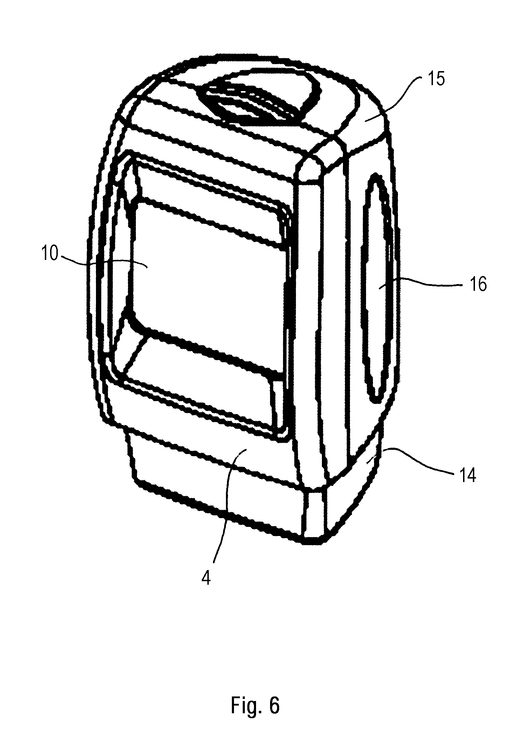

As shown in Figure 6, according to a preferred version, the identifying apparatus 1 consists of a particularly compact casing 4 that receives the integrated reader 5 (which contains the same components disclosed above), suitable signalling LEDs and interface with the exterior for transferring data.

In particular, the opening 20 - and thus the light sources 9 and the lens 12 - face the window 10 directly and it is not therefore necessary to provide a mirror interposed between the illumination and detecting devices and the window.

The compactness of this embodiment makes it particularly advantageous.

The identifying apparatus 1 can be further located directly above the counter or a shop or other suitable place.

According to a particularly preferred version, shown in Figure 6, the identifying apparatus 1 is made of a casing 4 provided with a resting base 14, that is integral or possibly rotatable in relation to a body 15 of the casing to enable a plurality of orientations of the window 10 and therefore greater versatility of use in the space of the commercial business. The casing 4 is provided with side guides 16 (or grooves) that enable the user to hold it. The interface with the exterior is not shown but is similar to that disclosed with reference to Figure 1.

The identifying apparatus 1 according to this embodiment preferably has dimensions the same as or less than 90mm x 85mm x 150mm.

According to a version that is not shown, if the security logo 3 is of a different type from the DPG logo and has optical features that are such as to enable recognition through a different illumination method, it is also possible that the illuminating device comprises at least a laser light source and a suitable scanning system for scanning the light and that the detecting device comprises one or more photodiodes. For example, an infrared laser source and a red laser source can be provided for illuminating the security logo 3 according to a suitable sequence. The optical code 2 can be illuminated with the infrared light or with the red light.

In an embodiment that is not shown, the identifying apparatus 1 comprises a first reading unit, provided with a first illuminating device arranged for illuminating the barcode 2 and with a first detecting device arranged for detecting the barcode 2.

The identifying apparatus 1 further comprises a second reading unit provided with a second illuminating device arranged for illuminating the security logo 3 and with a second detecting device arranged for detecting the security logo 3.

The first illuminating device, the first detecting device, the second illuminating device and the second detecting device are received inside the same casing.

The first reading unit may comprise a laser, a scanning system and a photodiode for reading the barcode 2.

The second reading unit may comprise a LEDs illuminator and an image sensor, with associated receiving optics for recognising the security logo 3.

Also this apparatus embodiment may be of the "presentation" type for "point of sale" applications.

As the aforesaid apparatus embodiment is in fact not provided with the conveying devices of known receiving machines it is much simpler and compact.

## Claims

1. Apparatus for identifying used material comprising a containing element (8) inside which there is housed an illuminating device (6) which illuminates an optical code (2) and a security logo (3) associated with said used material, said optical code (2) bearing coded information relating to said used material or to a product associated therewith, and a detecting device (7) which detects said optical code (2) and said security logo (3).

2. Apparatus according to claim 1, wherein said illuminating device (6) and said detecting device (7) are housed inside said containing element (8) to define an integrated reading unit (5).

3. Apparatus according to claim 1, or 2, wherein said containing element (8) comprises opening means (20) through which said illuminating device (6) and said detecting device (7) interact with said optical code (2) and with said security logo (3).

4. Apparatus according to claim 3, wherein said containing element (8) is shaped in such a way that said opening means (20) faces an external environment, so that said optical code (2) and said security logo (3) are manually positionable in front of said opening means (20) by an operator.

5. Apparatus according to claim 4, wherein said containing element (8) is shaped in such a way as to be located in a fixed counter, said opening means (20) facing a supporting and movement plane of said used material.

6. Apparatus according to claim 3, wherein said containing element (8) is received inside a casing (4) provided with window means (10), said casing (4) being shaped in such a way that said window means (10) faces an external environment, so that said optical code (2) and said security logo (3) are manually positionable in front of said window means (10) by an operator.

7. Apparatus according to claim 6, wherein said casing (4) further houses a deflecting mirror (11) which deflects at least a light radiation emitted by said illuminating device (6) and directed to said optical code (2) and said security logo (3) and a further light radiation coming from said optical code (2) and from said security logo (3) and directed to said detecting device (7).

8. Apparatus according to claim 7, wherein said casing (4) is shaped in such a way as to be located in a fixed counter, said window means (10) facing a supporting and movement plane of said used material.

9. Apparatus according to claim 6, wherein said casing (4) is provided with a base (14) for resting on a plane.

10. Apparatus according to claim 6, or 9, wherein said casing (4) is shaped in such a way as to be manually movable by an operator.

11. Apparatus according to any preceding claim, wherein said detecting device (7) detects an image of said optical code (2) and an image of said security logo (3).

12. Apparatus according to any preceding claim, wherein said illuminating device (6) comprises a plurality of emitting elements (9).

13. Apparatus according to claim 12, wherein said plurality of emitting elements (9) comprises at least a first emitting element (IR) arranged for emitting an electromagnetic radiation having a first wavelength and at least a second emitting element (R) arranged for emitting an electromagnetic radiation having a second wavelength.

14. Apparatus according to claim 13, wherein said plurality of emitting elements (9) comprises at least a third emitting element (B) arranged for emitting an electromagnetic radiation having a third wavelength.

15. Apparatus according to claim 13, or 14, wherein said first wavelength, said second wavelength and said third wavelength are chosen from a group comprising infrared, red, blue.

16. Apparatus according to any one of claims 12 to 15, wherein said plurality of emitting elements (9) comprises LEDs (light emitting diodes) (IR, R, B).

17. Apparatus according to any preceding claim, wherein said detecting device (7) comprises an optic receiving system for collecting a light radiation coming from said optical code (2) and from said security logo (3) and a sensor provided with an array of matrix-type photosensitive elements.

18. Apparatus according to claim 17, wherein said photosensitive elements are of the CCD or C-MOS type.

19. Apparatus according to any preceding claim, wherein said used material is a packaging material.

20. Apparatus according to claim 19, wherein said packaging material is a recyclable packaging material.

21. Apparatus according to claim 19, wherein said packaging material is a reusable packaging material.

22. Apparatus according to claim 20, or 21, wherein said packaging material is a container.

23. Apparatus according to claim 22, wherein said container is a container for drinks.

24. Method for identifying used material bearing an optical code (2) and a security logo (3), comprising providing a reading device (5) of said optical code (2) and of said security logo (3) and manually moving said used material and/or said reading device (5) for making said optical code (2) and said security logo (3) interact with said reading device (5).
